(19) Europäisches Patentamt
European Patent Office
Office européen des brevets

(11) **EP 4 120 123 A1**

(12) **EUROPEAN PATENT APPLICATION**
published in accordance with Art. 153(4) EPC

(43) Date of publication:
**18.01.2023 Bulletin 2023/03**

(51) International Patent Classification (IPC):
**G06K 9/00** (2022.01)

(21) Application number: **21901893.4**

(86) International application number:
**PCT/CN2021/084078**

(22) Date of filing: **30.03.2021**

(87) International publication number:
**WO 2022/121177 (16.06.2022 Gazette 2022/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.12.2020 CN 202011415577**

(71) Applicant: **Speed Space-Time Information Technology Co., Ltd.**
**Nanjing, Jiangsu 210000 (CN)**

(72) Inventors:
• **CHEN, Lei**
**Nanjing, Jiangsu 210000 (CN)**
• **XU, Zhongjian**
**Nanjing, Jiangsu 210000 (CN)**
• **ZHU, Biliang**
**Nanjing, Jiangsu 210000 (CN)**
• **XU, Yunhe**
**Nanjing, Jiangsu 210000 (CN)**

(74) Representative: **ZHAOffice SPRL**
**Rue de Bedauwe 13**
**5030 Gembloux (BE)**

(54) **SCAN LINE-BASED ROAD POINT CLOUD EXTRACTION METHOD**

(57)    The present invention discloses a scanning line-based road point cloud extraction method, comprising the following steps: S1, extracting a route edge point of each scanning line from a vehicle-mounted point cloud to serve as a starting point of the scanning line; S2, conducting searching according to the starting points, and determining a ground point or a ground object point according to the height difference between the starting point and the adjacent point; S3, if the adjacent points are ground points, adding the adjacent points into a ground point set of the scanning line; repeating step S2, and determining the next adjacent point; if the adjacent points are ground object points, constructing a spatial linear equation by using the existing ground point on the scanning line, and determining whether the next adjacent point of the adjacent point until traversing to the starting point of the next scanning line is finished; S4, clustering the ground points on each scanning line, and filtering the noise, thereby obtaining coherent scanning lines; and S5, on the basis of the coherent scanning lines, selecting a left end point and a right end point of each scanning line, and fitting boundaries on the left and right sides of the road to complete extraction and regularization of the road boundaries.

Fig. 1

## Description

## Technical Field

The present invention relates to the field of object identification, and in particular to a scanning line-based road point cloud extraction method, used for extracting urban roads, expressways, etc. from a vehicle-mounted LiDAR point cloud.

## Background

As an important feature of urban or suburban ground, roads play an important role in urban planning, disaster prediction, resource exploration, GIS database updating, digital cities and military reconnaissance. In recent years, with rapid development of LiDAR technology, there are more and more researches on detecting a road point cloud on the basis of vehicle-mounted and airborne LiDAR technology. According to different filtering principles, the algorithms are mainly divided into the following categories: (1) gradient-based filtering algorithm; (2) morphology-based filtering algorithm; (3) segmentation-based filtering algorithm; (4) filtering algorithm based on triangular irregular network; (5) Surface fitting based filtering algorithm; and (6) Scanning line based filtering algorithm.

Sun Meiling et al. proposed a scanning line based one-dimensional progressive morphological filtering algorithm, which analyzes the difference between the point value after operation and its original value on airborne LiDAR point cloud, in order to gradually remove non-ground points. Wang Hui et al. proposed a scanning line based mathematical morphological LiDAR point cloud filtering method for the defects of Keqi Zhang method in interpolation errors, and effectively processed the problem on zigzag scanning.

Wu Jian et al. first extracted ground points by RANSAC algorithm, then extracted road boundary feature points by multi-feature, wide-threshold and multi-level method, and finally fit the road boundary curve model by using RANSAC method. The method is featured by complex algorithm and many threshold setting items, so it is difficult to adapt to the needs of different complex scenes. Shi Wenzhong et al. determined scanning lines on the basis of ground point information and scanning line separation conditions, and then extracted road edge information from scanning lines. The method does not perform well in the scene where the road edge is occluded.

Most of the existing researches consider the local characteristics between point clouds, and filter the ground points through iterating the window size and defining the height difference threshold. However, for large-scale ground objects or ground object shelters, such methods do not perform well. Meanwhile, searching adjacent point as required results in high computation and poor efficiency.

Therefore, it is necessary to develop a scanning line-based road point cloud extraction method, which can identify the range of urban roads and expressway pavements, and solve the problems of discontinuous road extraction caused by terrain undulation and large-scale ground object shelters, so as to improve the efficiency and accuracy of road identification.

## Summary

The technical problem to be solved by the present invention is to provide a scanning line-based road point cloud extraction method, which can identify the range of urban roads and expressway pavements, and solve the problems of discontinuous road extraction caused by terrain undulation and large-scale ground object shelters, so as to improve the efficiency and accuracy of road identification.

To solve the above technical problem, the technical solution of the present invention is: a scanning line-based road point cloud extraction method, specifically comprising the following steps:

S1, selecting a starting point: extracting a route edge point of each scanning line from a vehicle-mounted point cloud to serve as a starting point of the scanning line;

S2, determining a ground point or a ground object point: conducting searching according to the starting point of each scanning line in step S1, and distinguishing whether the adjacent point is a ground point or a ground object point according to the height difference between the starting point and the adjacent point of the scanning line;

S3, searching the ground point along the scanning line: if the adjacent points are ground points, adding the adjacent points into a ground point set of the scanning line; repeating step S2, and continuing to determine whether the next adjacent points are ground points or ground object points; if the adjacent points are ground object points, constructing a spatial linear equation by using the existing ground point on the scanning line, and determining whether the next adjacent point of the adjacent point is a ground object point or a ground point until traversing to the starting point of the next scanning line is finished;

S4, filtering ground points: clustering the ground points on each scanning line, and filtering the ground points less than the set length threshold, thereby obtaining coherent scanning lines with noise removed; and

S5, obtaining road boundaries: on the basis of the coherent scanning lines with noise removed in step S4, selecting a left end point and a right end point of each scanning line, and fitting boundaries on the left and right sides of the road to complete extraction and regularization of the road boundaries,

wherein step S2 of determining whether the adjacent points are ground points or ground object points comprises the following specific steps: searching left and right on the basis of the starting point of the scanning line, determining whether the height difference $H_{ij}$ between the adjacent point and the starting point is less than the height difference threshold $H_t$; if it is less than the height difference threshold $H_t$, determining the same as ground points, and adding the adjacent points into a ground point set of the scanning line; if it is greater than the height difference threshold $H_t$, determining the same as ground object points, where the calculation formula of the height difference $H_{ij}$ is given below:

$$H_{ij} = \mid h_j - h_i \mid;$$

where $h_j$ is the height of the point to be determined, i.e., adjacent point j, and $h_i$ is the height of the current ground point i.

According to the above technical solution, in step S2, whether the height difference between the starting point and the adjacent point of the scanning line is less than the set threshold value is determined, thereby determining whether the adjacent point is a ground point or a ground object point; the ground point set is constructed through ground points, then the ground points are clustered and denoised to obtain coherent scanning line, and then the boundaries on both sides of the road are obtained through fitting to complete the extraction of the road boundary, and solve the problems of discontinuous road extraction caused by terrain undulation and large-scale ground object shelters, so as to improve the efficiency and accuracy of road identification.

As the preferred technical solution of the present invention, in step S3, if adjacent points are ground object points, the ground point set detected by the scanning line is constructed in an OXY space and the linear equations of the OXY space are y = k * x + b and z = m * y + n; the parameters k, b, m and n are solved, and the coordinates $(x_p, y_q)$ of the next adjacent point, i.e. the point p to be determined are substituted into the equation to solve the coordinates $(y_q, z_q)$ of the point q on the straight line; the difference $\Delta y = |yq\text{-}yp|$, $\Delta z = |zq\text{-}zp|$ between the point p to be determined and the point q on the straight line in the y direction and the z direction is calculated; if $\Delta y$ is less than the threshold $Y_t$ and $\Delta z$ is less than the height difference thread $H_t$, the point p to be determined is determined as a ground point, otherwise the same is determined as a ground object point.

As the preferred technical solution of the present invention, step S4 of clustering ground points on each scanning line by using region growing algorithm and filtering the ground points less than the set length threshold comprises the following specific steps:

S41, first randomly selecting one point from the ground point set of each scanning line as a seed point, determining he distance from the adjacent points; if it is less than the set distance threshold $D_t$, regarding the adjacent point to belong to a cluster, and marking it; then repeatedly searching the adjacent points around the marked adjacent point as the seed point until no adjacent points are within the range of the distance threshold $D_t$; if there are unmarked points on the scanning line, randomly selecting another point as the seed point, and repeating the above operation until all points on the scanning line are marked;

S42, then setting length threshold $D_s$, calculating the cluster length of the ground points according to the marked points; if it is less than the set length threshold $D_s$, removing the points less than the length threshold $D_s$ from the ground point set.

As the preferred technical solution of the present invention, in step S5 of selecting left end point and right end point of each scanning line, the boundaries on the left and right sides of the road are fit in the left and right directions by using the least squares algorithm, and during fitting, segmented fitting is carried out according to the distance DS in the vehicle traveling direction, in order to accurately extract boundaries of the arc-shaped road.

As the preferred technical solution of the present invention, the route edge point is stored in an LAS file, and its value is represented by 1, indicating the end of the last scanning line and the start of the next scanning line. Therefore, all the points with the route edge point value of 1 in LAS file are extracted as a starting point of each scanning line.

Compared with the prior art, the present invention has the following beneficial effects: the scanning line-based road point cloud extraction method adopts one-dimensional search on the basis of scanning lines, which effectively avoids the low efficiency of two-dimensional and even three-dimensional search in large data scenes. Moreover, it also performs well in regions with large topographic undulations or slope sections. The algorithm can also robustly extract the road boundaries from the regions with large ground object shelters.

**Brief Description of the Drawings**

Fig. 1 is a flowchart of the canning line-based road point cloud extraction method according to the present invention;

Fig. 2 is an original data map of a test area by the canning line-based road point cloud extraction method according to the present invention;

Fig. 3 shows the results of distinguishing ground points and ground object points in the test area by the canning line-based road point cloud extraction method according to the present invention;

Fig. 4 shows ground points extracted by the canning line-based road point cloud extraction method according to the present invention; and

Fig. 5 shows road boundaries extracted by the canning line-based road point cloud extraction method according to the present invention.

**Detailed Description**

The technical solutions in the embodiments of the present invention will be clearly and completely described below in conjunction with the drawings in the embodiments of the present invention.

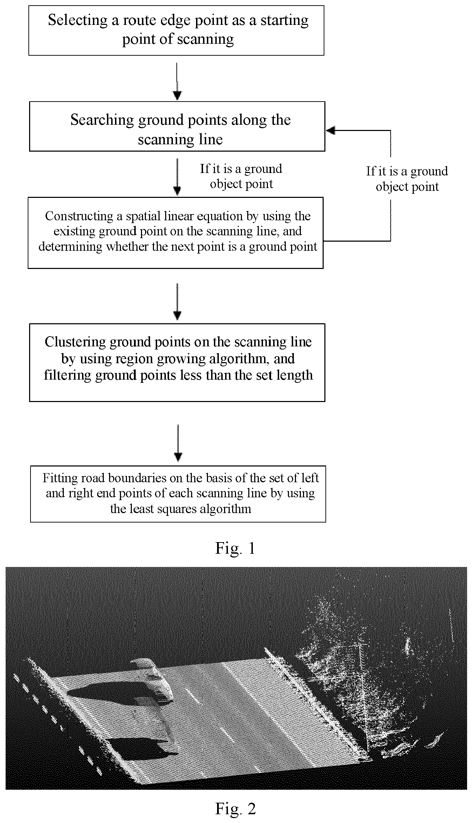

Embodiment: as shown in Fig. 1, the canning line-based road point cloud extraction method according to the present invention specifically comprising the following steps:

S1, selecting a starting point: Fig. 2 is the test area data of the present invention; selecting a starting point: extracting a route edge point of each scanning line from a vehicle-mounted point cloud to serve as a starting point of the scanning line; the route edge point is stored in an LAS file, and its value is represented by 1, indicating the end of the last scanning line and the start of the next scanning line; and all the points with the route edge point value of 1 in LAS file are extracted as a starting point of each scanning line.

S2, determining a ground point or a ground object point: conducting searching according to the starting point of each scanning line in step S1, and determining the height difference between the starting point and the adjacent point of the scanning line is less than the set threshold, thereby distinguishing whether the adjacent point is a ground point or a ground object point;

wherein step S2 of determining whether the adjacent points are ground points or ground object points comprises the following specific steps: searching left and right on the basis of the starting point of the scanning line, determining whether the height difference $H_{ij}$ between the adjacent point and the starting point is less than the height difference threshold $H_t$; if it is less than the height difference threshold $H_t$, determining the same as ground points, and adding the adjacent points into a ground point set of the scanning line; if it is greater than the height difference threshold $H_t$, determining the same as ground object points, where the calculation formula of the height difference $H_{ij}$ is given below:

$$H_{ij} = \mid h_j - h_i \mid;$$

and where $h_j$ is the height of the point to be determined, i.e., adjacent point j, and $h_i$ is the height of the current ground point i;

The height difference threshold $H_t$ is determined by the pavement evenness; through the experiment, it is found that if the height difference threshold $H_t$ is set to L, the ground point is easily misdetermined as a ground object point, which increases the complexity of the algorithm; if the height difference threshold $H_t$ is set to 3L, the ground object point is easily misdetermined as a ground point; if the height difference threshold $H_t$ is set to 2L, it is practical to extract a ground point; and therefore, the setting of the height difference threshold is directly related to the preliminary extraction effect of the ground point. The specific threshold value is mainly related to the distance L between adjacent points and is determined by the pavement evenness.

S3, searching the ground point along the scanning line: if the adjacent points are ground points, adding the adjacent points into a ground point set of the scanning line; repeating step S2, and continuing to determine whether the next adjacent points are ground points or ground object points; and if the adjacent points are ground object points, constructing a spatial linear equation by using the existing ground point on the scanning line, and determining whether the next adjacent point of the adjacent point is a ground object point or a ground point until traversing to the starting point of the next scanning line is finished.

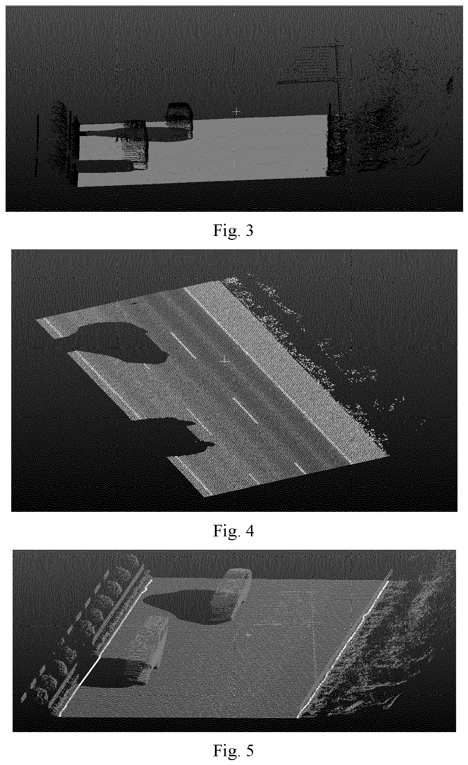

In step S3, if adjacent points are ground object points, the ground point set detected by the scanning line is constructed in an OXY space and the linear equations of the OXY space are y = k * x + b and z = m * y + n; the parameters k, b, m and n are solved, and the coordinates $(x_p, y_q)$ of the next adjacent point, i.e. the point p to be determined are substituted into the equation to solve the coordinates $(y_q, z_q)$ of the point q on the straight line; calculating the difference between the point p to be determined and the point q on the straight line in the y direction and the z direction $\Delta y = |y_q - y_p|$, $\Delta z = |z_q - z_p|$, if $\Delta y$ is less than the threshold $Y_t$ and $\Delta z$ is less than the height difference thread $H_t$, determining the point p to be determined is a ground point, otherwise determining the same as a ground object point; through the experiment, it is found that if the threshold $Y_t$ in the Y direction is set to L, more ground points are misdetermined as ground object points; if the threshold $Y_t$ in the Y direction is set to 2L, some ground points are still misdetermined as ground object points; if the threshold $Y_t$ in the Y direction is set to 3L, it is practical to extract a ground point (as shown in Fig. 3, Fig. 4); if the threshold $Y_t$ in the Y direction is set to 4L, the ground object point is easily determined as a ground point; and the height difference threshold $H_t$ is the same as that in step S2.

S4, filtering ground points: clustering the ground points on each scanning line, and filtering the ground points less than the set length threshold, thereby obtaining coherent scanning lines with noise removed; and

Step S4 of clustering ground points on each scanning line by using region growing algorithm and filtering the ground points less than the set length threshold comprises the following specific steps:

S41, first randomly selecting one point from the ground point set of each scanning line as a seed point, determining he distance from the adjacent points; if it is less than the set distance threshold $D_t$, regarding the adjacent point to belong to a cluster, and marking it; then repeatedly searching the adjacent points around the marked adjacent point as the seed point until no adjacent points are within the range of the distance threshold $D_t$; if there are unmarked points on the scanning line, randomly selecting another point as the seed point, and repeating the above operation until all points on the scanning line are marked; and

S42, then setting length threshold Ds, calculating the cluster length of the ground points according to the marked points; if it is less than the set length threshold Ds, removing the points less than the length threshold Ds from the ground point set; if the distance threshold $D_t$ is set to L, there will be a pepper salt phenomenon, resulting in the clustering being too scattered; if the distance threshold $D_t$ is set to 2L, the clustering effect is good and meets the requirements of subsequent processing.

S5, obtaining road boundaries: on the basis of the coherent scanning lines with noise removed in step S4, selecting a left end point and a right end point of each scanning line, and fitting boundaries on the left and right sides of the road to complete extraction and regularization of the road boundaries,

In step S5 of selecting left end point and right end point of each scanning line, the boundaries on the left and right sides of the road are fit in the left and right directions by using the least squares algorithm. During fitting, segmented fitting is carried out according to the distance DS in the vehicle traveling direction, which can accurately extract inaccuracies on the boundaries of the arc-shaped road. The distance DS can be selected according to the actual situation. It is recommended to select 1m as the threshold of the distance DS. The extracted road boundaries are as shown in Fig. 5.

The foregoing are only better embodiments of the present invention and are not intended to limit the present invention. Any modification, equivalent replacement, improvement, etc. made within the spirit and principles of the present invention shall be covered within the scope of protection for the present invention.

**Claims**

1. A scanning line-based road point cloud extraction method, specifically comprising the following steps:

S1, selecting a starting point: extracting a route edge point of each scanning line from a vehicle-mounted point cloud to serve as a starting point of the scanning line;
S2, determining a ground point or a ground object point: conducting searching according to the starting point of each scanning line in step S1, and distinguishing whether the adjacent point is a ground point or a ground object point according to the height difference between the starting point and the adjacent point of the scanning line;
S3, searching the ground point along the scanning line: if the adjacent points are ground points, adding the adjacent points into a ground point set of the scanning line; repeating step S2, and continuing to determine whether the next adjacent points are ground points or
ground object points; if the adjacent points are ground object points, constructing a spatial linear equation by using the existing ground point on the scanning line, and determining whether the next adjacent point of the adjacent point is a ground object point or a ground point until traversing to the starting point of the next scanning line is finished;
S4, filtering ground points: clustering the ground points on each scanning line, and filtering the ground points less than the set length threshold, thereby obtaining coherent scanning lines with noise removed; and
S5, obtaining road boundaries: on the basis of the coherent scanning lines with noise removed in step S4, selecting a left end point and a right end point of each scanning line, and fitting boundaries on the left and right sides of the road to complete extraction and regularization of the road boundaries, wherein step S2 of determining whether the adjacent points are ground points or ground object points comprises the following specific steps: searching left and right on the basis of the starting point of the scanning line, determining whether the height difference $H_{ij}$ between the adjacent point and the starting point is less than the height difference threshold $H_t$; if it is less than the height difference threshold

$H_t$, determining the same as ground points, and adding the adjacent points into a ground point set of the scanning line; if it is greater than the height difference threshold $H_t$, determining the same as ground object points, where the calculation formula of the height difference $H_{ij}$ is given below:

$$H_{ij} = \mid h_j - h_i \mid;$$

and

where $h_j$ is the height of the point to be determined, i.e., adjacent point j, and $h_i$ is the height of the current ground point i.

2. The scanning line-based road point cloud extraction method according to claim 1, wherein in step S3, if adjacent points are ground object points, the ground point set detected by the scanning line is constructed in an OXY space and the linear equations of the OXY space are given below:

$$y = k * x + b;$$

and

$$z = m * y + n;$$

k, m are the slopes of a straight line, and b, n are the intercepts of a straight line;
the parameters k, b, m and n are solved, and the coordinates $(x_p, y_q)$ of the next adjacent point, i.e. the point p to be determined are substituted into the equation to solve the coordinates $(y_q, z_q)$ of the point q on the straight line; and the difference $\Delta y = |y_q - y_p|$, $\Delta z = |z_q - z_p|$ between the point p to be determined and the point q on the straight line in the y direction and the z direction is calculated; if $\Delta y$ is less than the threshold $Y_t$ and $\Delta z$ is less than the height difference thread $H_t$, the point p to be determined is determined as a ground point, otherwise the same is determined as a ground object point.

3. The scanning line-based road point cloud extraction method according to claim 2, wherein step S4 of clustering ground points on each scanning line by using region growing algorithm and filtering the ground points less than the set length threshold comprises the following specific steps:

S41, first randomly selecting one point from the ground point set of each scanning line as a seed point, determining he distance from the adjacent points; if it is less than the set distance threshold $D_t$, regarding the adjacent point to belong to a cluster, and marking it; then repeatedly searching the adjacent points around the marked adjacent point as the seed point until no adjacent points are within the range of the distance threshold $D_t$; if there are unmarked points on the scanning line, randomly selecting another point as the seed point, and repeatedly determining whether the distance from the adjacent points is within the threshold range until all points on the scanning line are marked; and
S42, then setting length threshold $D_s$, calculating the cluster length of the ground points according to the marked points; if it is less than the set length threshold $D_s$, removing the points less than the length threshold $D_s$ from the ground point set.

4. The scanning line-based road point cloud extraction method according to claim 2, wherein in step S5 of selecting left end point and right end point of each scanning line, the left and right ends of the road are connected respectively in order to fit the boundaries on the left and right sides of the road, during fitting, segmented fitting is carried out according to the distance DS in the vehicle traveling direction, in order to accurately extract boundaries of the arc-shaped road.

5. The scanning line-based road point cloud extraction method according to claim 2, wherein the route edge point is stored in an LAS file, and its value is represented by 1, indicating the end of the last scanning line and the start of the next scanning line.

Selecting a route edge point as a starting
point of scanning

Searching ground points along the
scanning line

If it is a ground
object point

If it is a ground
object point

Constructing a spatial linear equation by using the
existing ground point on the scanning line, and
determining whether the next point is a ground point

Clustering ground points on the scanning line
by using region growing algorithm, and
filtering ground points less than the set length

Fitting road boundaries on the basis of the set of left
and right end points of each scanning line by using
the least squares algorithm

Fig. 1

Fig. 2

Fig. 3

Fig. 4

Fig. 5

## INTERNATIONAL SEARCH REPORT

| | International application No. |
|---|---|
| | **PCT/CN2021/084078** |

**A. CLASSIFICATION OF SUBJECT MATTER**

G06K 9/00(2006.01)i

According to International Patent Classification (IPC) or to both national classification and IPC

**B. FIELDS SEARCHED**

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, WOTXT: 道路, 点云, 边界, 高差, 地面点, 地物点, road, point cloud, boundary, height difference, ground point, feature point,

**C. DOCUMENTS CONSIDERED TO BE RELEVANT**

| Category* | Citation of document, with indication, where appropriate, of the relevant passages | Relevant to claim No. |
|---|---|---|
| PX | CN 112200171 A (SPEED SPACE-TIME INFORMATION TECHNOLOGY CO., LTD.) 08 January 2021 (2021-01-08)<br>claims 1-5, description paragraphs 8-13 | 1-5 |
| A | CN 109684921 A (JILIN UNIVERSITY) 26 April 2019 (2019-04-26)<br>description paragraphs 6-99 | 1-5 |
| A | CN 108062517 A (WUHAN UNIVERSITY) 22 May 2018 (2018-05-22)<br>description, paragraphs 4-21 | 1-5 |
| A | CN 103778429 A (QINGDAO SUPERSURS MOBILE SURVEYING CO., LTD.) 07 May 2014 (2014-05-07)<br>entire document | 1-5 |
| A | CN 104197897 A (XIAMEN UNIVERSITY) 10 December 2014 (2014-12-10)<br>entire document | 1-5 |
| A | WO 2012056255 A1 (AMVRAZIS SERAPHIM) 03 May 2012 (2012-05-03)<br>entire document | 1-5 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 August 2021** | **27 August 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
|---|
| **PCT/CN2021/084078** |

| Patent document cited in search report | | | Publication date (day/month/year) | Patent family member(s) | | | Publication date (day/month/year) |
|---|---|---|---|---|---|---|---|
| CN | 112200171 | A | 08 January 2021 | None | | | |
| CN | 109684921 | A | 26 April 2019 | None | | | |
| CN | 108062517 | A | 22 May 2018 | CN | 108062517 | B | 23 June 2020 |
| CN | 103778429 | A | 07 May 2014 | CN | 103778429 | B | 08 March 2017 |
| CN | 104197897 | A | 10 December 2014 | CN | 104197897 | B | 04 January 2017 |
| WO | 2012056255 | A1 | 03 May 2012 | None | | | |

Form PCT/ISA/210 (patent family annex) (January 2015)